# EUROPEAN PATENT SPECIFICATION

(11) **EP 2 935 865 B1**
(45) Date of publication and mention of the grant of the patent: **24.06.2020**
(21) Application number: 12818487.6
(22) Date of filing: 21.12.2012
(51) Int. Cl.: F02P 13/00, F02B 19/18

(54) **IGNITION PLUG TIP OF AN INTERNAL COMBUSTION ENGINE**
ZÜNDKERZESPITZE EINES VERBRENNUNGSMOTORS
POINTE D'UNE BOUGIE D'ALLUMAGE D'UN MOTEUR À COMBUSTION INTERNE

(43) Date of publication of application: 28.10.2015
(73) Proprietor: Caterpillar Energy Solutions GmbH, 68167 Mannheim (DE)
(72) Inventor: RAPP, Manfred, 76698 Ubstadt-Weiher (DE)
(74) Representative: BRP Renaud & Partner mbB Rechtsanwälte Patentanwälte Steuerberater
(86) International application number: PCT/EP2012/005352
(87) International publication number: WO 2014/094808

(56) References cited:
- EP-A1- 2 520 780
- WO-A1-91/12418
- JP-A- 2007 297 942
- JP-A- 2007 297 942
- JP-A- 2010 096 089
- US-A- 3 012 085
- US-A- 3 066 662

## Description

### Technical Field

The present disclosure generally relates to an ignition plug tip of an ignition plug of an internal combustion engine and, more particular, to an ignition plug tip of a gaseous fuel internal combustion engine comprising a pre-combustion chamber.

### Background

It is known to use an ignition plug including a pre-combustion chamber in some internal combustion engine applications, such as gaseous fuel applications. Typically, a pre-combustion chamber is a relatively small gas accumulating chamber located in the engine cylinder head. The pre-combustion chamber is in fluid communication with the main combustion chamber of the engine via a number of small flow channels. During operation, a spark plug ignites gaseous fuel within the pre-combustion chamber (as opposed to igniting the gaseous fuel in the main combustion chamber). Ignition of the gaseous fuel in the pre-combustion chamber generates a front of burning fuel which is jetted or otherwise advanced through the flow channels into the main combustion chamber thereby igniting the mixture of gaseous fuel and air therein.

In the course of future emission regulations, power output requirements, performance and efficiency of internal combustion engines comprising an ignition plug with an integrated pre-combustion chamber may have to be improved. Thus, a smooth and efficient transition of the burning fuel from the pre-combustion chamber into the main combustion chamber may be desired. Furthermore, it is required to have the flame front extending out of the pre-combustion chamber to burn the entire air-fuel-mixture within the main combustion chamber for improving the efficiency of the gaseous fuel internal combustion engine.

EP 2 520 780 A1 discloses an auxiliary chamber-type gas engine comprises a plurality of nozzles through which the auxiliary chamber and the main combustion chamber are in fluid communication with each other. It is further disclosed that an opening edge at the auxiliary combustion chamber side of each of the plurality of nozzles is formed to have a curved surface for making it possible to maintain stable combustion in the main combustion chamber while preventing degradation in combustion performance.

Further examples of ignition devices are disclosed by US 3,066,662 A, US 3,012,085 A, JP 2010 096089 A, and JP 2007 297942 A.

WO 91/12418 A1 shows a precombustion chamber assembly defining a prechamber having a preselected shape and volume and includes a plurality of ejection passages extending radially outwardly such that burning gases are funneled radially outwardly through the plurality of ejection passages.

The present disclosure is directed, at least in part, to improving or overcoming one or more aspects of prior systems.

### Summary of the Disclosure

According to an aspect of the present disclosure, an ignition plug tip of an ignition plug is configured to be used in an internal combustion engine including at least one main combustion chamber. The disclosed ignition plug tip comprises a nozzle portion forming at least a portion of a pre-combustion chamber and having an inner surface. At least one flow channel is configured to fluidly connect the pre-combustion chamber to the main combustion chamber. The at least one flow channel extends tangentially with respect to a center axis of the nozzle portion such that a swirl of the combustion mixture within the main combustion chamber is increased. The at least one flow channel includes a main portion having constant cross-section and a funnel-shaped inlet portion at the inner surface. The funnel-shaped inlet portion has a length of about 30 % to 70 % the length of the at least one flow channel.

According to a further aspect of the present disclosure, an ignition plug configured to be used in an internal combustion engine comprises an ignition plug main body forming at least a portion of a pre-combustion chamber, and an ignition plug tip according to the present disclosure attached to the ignition plug main body.

According to a further aspect of the present disclosure, an internal combustion engine may comprise at least one cylinder defining at least a portion of a main combustion chamber, a cylinder head configured to form at least a portion of the main combustion chamber, and at least one ignition plug according to the present disclosure attached to the cylinder head, wherein the ignition plug tip at least partially extends into the main combustion chamber and is in fluid communication with the main combustion chamber via the at least one flow channel.

In some embodiments, the diameter of the funnel-shaped inlet portion at the inner surface is greater than the diameter of the main portion.

In some other embodiments, the at least one flow channel may comprise a funnel-shaped outlet at an outer surface of the nozzle portion. The outer surface may extend at least partially into the main combustion chamber. The funnel-shaped outlet opens in a direction towards the outer surface, such that the diameter of the outlet is greater than the constant cross-section of the main portion of the flow channel.

In some embodiments, the funnel-shaped inlet portion may further comprise a rounded or chamfered edge at the inner surface. In some other embodiments, the funnel-shaped outlet may be constituted by a rounding or a chamfer.

Other features and aspects of this disclosure will be apparent from the following description and the accompanying drawings.

### Brief Description of the Drawings

Fig. 1 is a diagrammatic cross-sectional view of an embodiment of an internal combustion engine with an ignition plug having an ignition plug tip of the present disclosure shown installed in a cylinder head of the engine;
Fig. 2 is a diagrammatic cross-sectional view of the ignition plug of Fig. 1 shown in greater detail;
Fig. 3 is a schematic view of a bottom end portion of the ignition plug tip showing a plurality of orifices extending through the ignition plug tip and being revealed; and
Fig. 4 is a schematic cut view of a flow channel taken along a line IV - IV of Fig. 2.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that providing an inlet portion of a flow channel of an ignition plug tip of an ignition plug in a funnel-like shape may support in, due to the decreasing cross-section, accelerating the burning fuel, stabilizing the transition of the burning fuel from the pre-combustion chamber into the main combustion chamber, and stabilizing the combustion within the main combustion chamber. By further providing an opening edge of the funnel-shaped inlet portion at the pre-combustion chamber side may smooth the transition from the pre-combustion chamber into the flow channel, which may further increase the velocity of the burning fuel and decrease any loss of kinetic energy of the burning fuel.

The present disclosure may be further based in part on the realization that providing the outlet of the flow channel of the ignition plug tip in a funnel-like shape may have an improved and steady transition in velocity of the burning fuel extending out of the flow channel. An acceleration of the burning fuel within the flow channel and a smooth transition of the effective cross-section of the flow channel may cause a smooth transition of the velocity of the burning fuel when extending out of the flow channel into the main combustion chamber, such that the burning fuel in the form of torches may reach the entire space of the main combustion chamber, which leads to a high efficient combustion and increases the efficiency of the internal combustion engine.

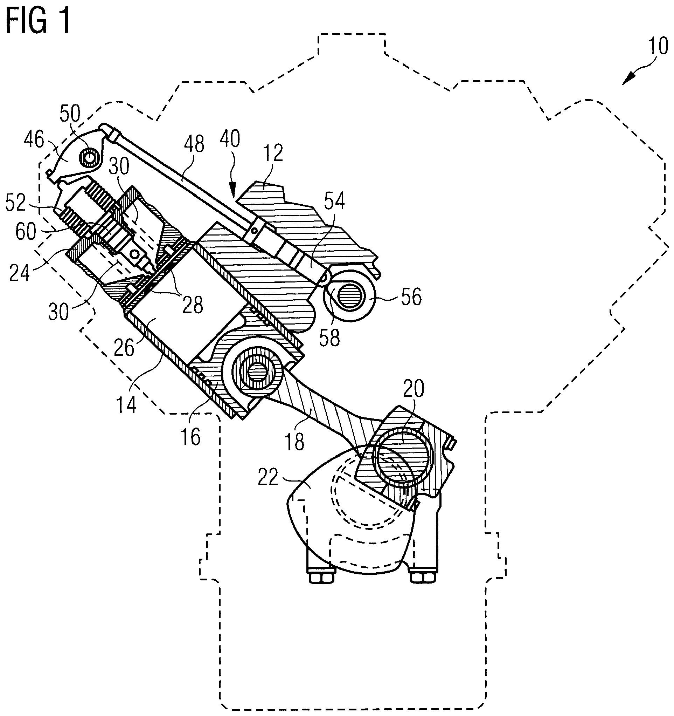

Referring now to the drawings, an exemplary embodiment of an internal combustion engine 10 is illustrated in Fig. 1. The internal combustion engine 10 may include features not shown, such as fuel systems, air systems, cooling systems, peripheries, drivetrain components, turbochargers, etc. For the purposes of the present disclosure, the internal combustion engine 10 is considered a four-stroke gaseous fuel internal combustion engine. One skilled in the art will recognize, however, that the gaseous fuel internal combustion engine 10 may be any type of engine (turbine, gas, diesel, natural gas, propane, two-stroke, etc.) that would utilize an ignition plug having an integrated pre-combustion chamber. Furthermore, the internal combustion engine 10 may be of any size, with any number of cylinders, and in any configuration ("V," in-line, radial, etc.). The internal combustion engine 10 may be used to power any machine or other device, including locomotive applications, on-highway trucks or vehicles, off-highway trucks or machines, earth moving equipment, generators, aerospace applications, marine applications, pumps, stationary equipment, or other engine powered applications.

The internal combustion engine 10 includes an engine block 12 having a plurality of cylinders 14 (one of which is illustrated in Fig. 1). A piston 16 is slidably disposed within the cylinder 14 to reciprocate between a top-dead-center position and a bottom-dead-center position. A connecting rod 18 connects the piston 16 to an eccentric crankpin 20 of a crankshaft 22 such that reciprocating motion of the piston results in rotation of the crankshaft 22.

The internal combustion engine 10 also includes a cylinder head 24 engaged with the engine block 12 to cover the cylinder 14, thereby defining a main combustion chamber 26. The cylinder head 24 defines intake and exhaust openings 28 that allow intake gases into the main combustion chamber 26 and exhaust gases out of the main combustion chamber 26, respectively. The engine valves 30 are positioned to selectively open and close the openings 28. Each cylinder 14 includes multiple intake and exhaust openings 28.

The internal combustion engine 10 includes a series of valve actuation assemblies 40 (one of which is illustrated in Fig. 1). The multiple valve actuation assemblies 40 are provided per cylinder 14. For example, one valve actuation assembly may be used to open and close the intake valves and another valve actuation assembly may be provided to open and close the exhaust valves.

The valve actuation assembly 40 includes a rocker arm 46. The rocker arm 46 is pivotally mounted in the cylinder head 24 and attaches to the engine valves 30 at one end and attaches to a push rod 48 at the other end. Oscillation of the rocker arm 46 about its pivot point 50 causes the valves 30 to move between an open position and a closed position. The valve actuation assembly 40 also includes valve springs 52 that bias the valves 30 toward the closed position (i.e. closing the intake and exhaust openings 28).

The other end of the push rod 48 engages a lifter 54 which may engage a camshaft 56. The camshaft 56 operatively engages the crankshaft 22. The camshaft 56 is connected with crankshaft 22 in any manner readily apparent to one skilled in the art where rotation of the crankshaft 22 results in rotation of the camshaft 56. For example, camshaft 56 may be connected to crankshaft 22 through a gear train (not shown).

As shown in Fig. 1, a first cam lobe 58 is disposed on the camshaft 56 to engage the lifter 54. One skilled in the art may recognize that the camshaft 56 may include additional cam lobes to engage with other lifters in order to actuate additional engine valves.

The internal combustion engine 10 also includes an ignition plug 60 having a pre-combustion chamber. The ignition plug 60 is positioned within the cylinder head 24 between the valves 30. The ignition plug 60 may be configured in a variety of ways. Any assembly capable of being positioned in the cylinder head 24 to support a combustion event outside of the main combustion chamber 26, and direct the combustion into the main combustion chamber 26 may be used.

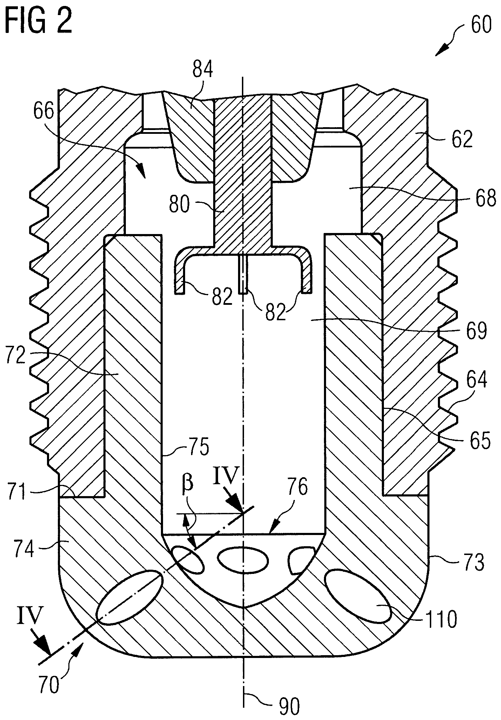

Referring now to Fig. 2, the ignition plug 60 of Fig. 1 is shown in greater detail. The ignition plug 60 includes an ignition plug main body 62 and an ignition plug tip 70 attached to the ignition plug main body 62. The ignition plug main body 62 includes a threaded portion 64 configured to engage with a threaded portion of the cylinder head 24 (see Fig. 1).

Both the ignition plug main body 62 and the ignition plug tip 70 may be formed by casting. Preferably, the ignition plug tip 70 may be formed by metal sintering and may consist of a material having a high thermal and mechanical stress resistance, such as, for example, a chrome-nickel alloy. For instance, the ignition plug tip 70 may consist of LC-NI 99 having the material number 2.4068.

The ignition plug main body 62 and the ignition plug tip 70 are disposed about a center axis 90 and include a substantially cylindrical cross-section. The ignition plug main body 62 defines a first portion 68 of a pre-combustion chamber 66. The ignition plug tip 70 defines a second portion 69 of the pre-combustion chamber 66. The first portion 68 and the second portion 69 are in fluid communication with each other. A sealing mechanism (not shown in the drawings) may be provided at the first portion 68 of the pre-combustion chamber 66 for sealing the pre-combustion chamber 66 with respect to the upper portion of the pre-combustion chamber 66.

At least one electrode 80 extends along the center axis 90 and includes at least one electrode end 82 at least partially extending into the first and second portions 68, 69 of the pre-combustion chamber 66. The at least one electrode 80 may be electrically connected to an engine control unit (not shown) and may be configured to generate a spark at the at least one electrode end 82 upon a signal provided by the engine control unit. As indicated in Fig. 2, the at least one electrode 80 is supported by an insulator 84, such as, for example, a ceramic material.

The ignition plug tip 70 comprises a connecting portion 72 and a nozzle portion 74. The connecting portion 72 is configured to be inserted into a receiving portion 65 of the ignition plug main body 62. As shown in Fig. 2, the connecting portion 72 and the receiving portion 65 have a cylindrical shape substantially corresponding to each other, such that the connecting portion 72 of the ignition plug tip 70 at least partially form-fits into the receiving portion 65 of the ignition plug main body 72.

The ignition plug tip 70 is fixedly attached to the ignition plug main body 62 by means of welding, such as, for example, laser beam welding. It is understood that the beam weld circumferentially extends around the entire flange formed between the bottom end of the ignition tip main body 62 and a shoulder 71 of the nozzle portion 74 of the ignition plug tip 70. In some embodiments, the ignition plug tip 70 may be fixedly attached to the ignition plug main body 62 by means of, for instance, soldering or any other suitable means. In some other embodiment, the ignition plug tip 70 may be removably attached to the ignition plug main body 62 by means of, for instance, snap fit, pressure fit, or any other suitable means. In such embodiments, for example, after a predetermined operation time of the ignition plug 60 or in the case of wear of the ignition plug tip 70, the ignition plug tip 70 may be replaced by a new ignition plug tip.

As further indicated in Fig. 2, the ignition plug tip 70 comprises an inner surface 75 forming the second portion 69 of the pre-combustion chamber 66. The inner surface 75 includes a bottom portion 76 having a generally convex funnel-like shape. It is preferred that the bottom portion 76 is cup-like shaped having a convex form.

The ignition plug tip 70 includes an outer surface 73 configured to at least partially extend into the main combustion chamber 26 of the internal combustion engine 10. The ignition plug tip 70 includes at least one flow channel 110 disposed at the nozzle portion 74. Specifically, the at least one flow channel 110 is configured to fluidly connect the pre-combustion chamber 66 with the main combustion chamber 26 (see Fig. 1). It is further preferred that the at least one flow channel 110 fluidly connects the pre-combustion chamber 66 at the bottom portion 76 with the main combustion chamber 26.

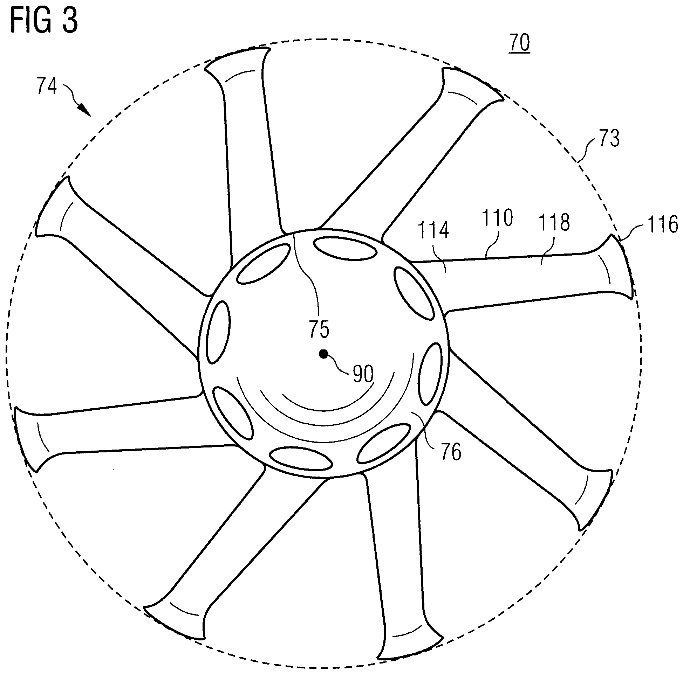

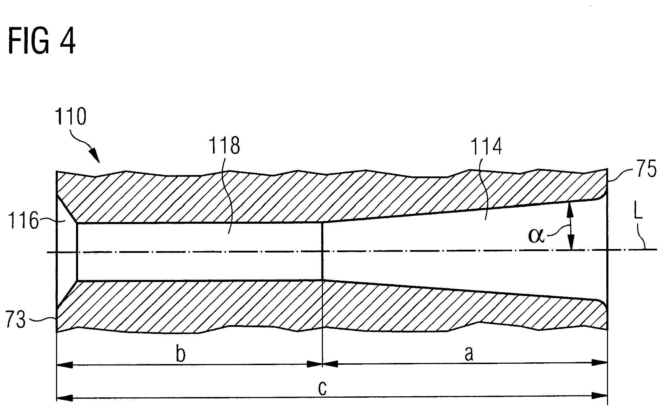

With reference to Figs. 3 and 4, the nozzle portion 74 of the ignition plug tip 70 is shown in greater detail. Particularly, a top view of the nozzle portion 74 of the ignition plug tip 70 of Fig. 2 is illustrated in Fig. 3. Fig. 4 shows a cut view taken along line IV - IV of Fig. 2. As illustrated in Fig 3, the ignition plug tip 70 includes eight flow channels. In some other embodiments, the ignition plug tip 70 may include more or less than eight flow channels. The illustration of Fig. 3 shows the nozzle portion 74 and the eight flow channels in a revealed manner, such that an exact expansion of the flow channels is shown in greater detail.

In the following, features of the at least one flow channel 110 are explained in detail with reference to Figs. 3 and 4. However, it should be understood that each of the other illustrated flow channels of the ignition plug tip 70 may also comprise the same technical features and aspects described with reference to the flow channel 110.

Each of the at least one flow channel 110 comprises a funnel shaped inlet portion 114 disposed at the inner surface 75 of the nozzle portion 74 and an outlet 116 disposed at the outer surface 73 of the nozzle portion 74. The at least one flow channel 110 further comprises a main portion 118 configured to fluidly connect the inlet portion 114 with the outlet 116. The main portion 118 includes a length b and has a substantially constant cross-section. For instance, the main portion 118 comprises a constant cross-section in the shape of a circle, an oval, a rectangle, or any other suitable cross-sectional shape. The funnel-shaped inlet portion 114 has a length a of about 30 % to 70 %, preferably about 40 % to 60 % the length of the entire flow channel 110. The length of a flow channel 110 may be the length c of a center axis L of the flow channel 110, wherein the length c of the center axis L may be constituted by the length a of the inlet portion 114 plus the length b of the main portion 118, such that the length c extends from the opening edge of the inlet portion 114 at the inner surface 75 to the outlet 116 at the outer surface 73.

In some embodiments, the funnel-shaped inlet portion 114 has an opening angle α of, for example, about 1° to 5°, preferably 1° to 3° with respect to the center axis L of the flow channel 110, such that the diameter of the funnel shaped inlet portion 114 at the inner surface 75 is greater than the constant diameter of the main portion 118.

The outlet 116 is also funnel-shaped, such that the cross-sectional diameter of the outlet 116 is greater than the constant cross-sectional diameter of the main portion 118. In some embodiments, the funnel-shaped outlet 116 may comprise a rounding. As shown in Fig. 4, the funnel-shaped outlet 116 may comprises a chamfer. It should be noted that the length of the funnel shaped outlet 116 is much smaller than the length a of the funnel-shaped inlet portion 114.

For example, the main portion 118 may comprise a constant cross-sectional diameter of about 0.6 to 2.0 mm. In such embodiments, the outlet 116 may comprise a cross-sectional diameter being about 5 to 20 %, preferably about 10 to 15 % greater than the cross-sectional diameter of the main portion 118. In such embodiment, for example, when the cylindrical main portion 118 comprises a cross-sectional diameter of 1.0 mm, the rounding of the outlet 116 may be in a range from about R0.1 to R0.5. Similarly, in the case of the outlet 116 being provided with a chamfer, the cross-sectional diameter of the outlet may comprise, for instance, about 1.1 to 1.2 mm, such that a chamfer of, for example, 0.1 x 0.1 is provided.

For example, the funnel-shaped inlet portion 114 may comprise an opening angle α of about 2° with respect to the center axis L of the flow channel 110, and a length a of about 2.0 mm. In such embodiment, the main portion 118 may comprise a length b of about 2.0 mm, such that the entire flow channel 110 comprises a length c of about 4.0 mm. In such embodiment, the length a of the funnel-shaped inlet portion 114 is about 50 % the length c of the flow channel 110. In such embodiment, for example, when the cylindrical main portion 118 comprises a cross-sectional diameter of 1 mm, the rounding of the opening edge at the inner surface 75 may be in a range from about R0.1 to R0.5. Similarly, in the case that the opening edge of the inlet portion 114 at the inner surface 75 may be provided with a chamfer, the cross-sectional diameter of the opening edge may comprise, for instance, about 1.1 to 1.2 mm, such that a chamfer of, for example, 0.1 x 0.1 is provided.

The funnel-shaped inlet portion 114 comprises a cross-sectional diameter at the inner surface 75 being greater than the constant cross-sectional diameter of the main portion 118. For example, the diameter of the funnel-shaped inlet portion114 at the inner surface 75 may be about 5 to 20 %, preferably about 10 to 15 % greater than the constant cross-sectional diameter of the main portion 118 of the at least one fuel channel 110.

The transitioning portion between, for example, the inlet portion 114 and the main portion 118 may be also rounded, such that the burning fuel flow is further optimized. Similarly, the transitioning portion between the outlet 116 and the main portion 118 may also be rounded.

As depicted in Fig. 3, the at least one flow channel 110 extends tangentially with respect to the center axis 90. The tangentially angle between two adjacent flow channels 110 may be, for example, in the range from about 35° to 45°. The tangentially flow channel 110 may support in having a better transition of the burning fuel from the pre-combustion chamber 69 into the flow channel. Furthermore, the tangentially flow channel 110 is arranged in a manner such that a swirl of the combustion mixture within the main combustion chamber 26 may be increased.

The exemplary disclosed ignition plug tip 70 may further include at least one further flow channel comprising the same technical features as described with respect to the at least one flow channel 110. However, the inlet and the outlet of the at least one further flow channel may be arranged at a higher level with respect to the center axis 90 than the at least one flow channel 110. This is that the at least one flow channel 110 is disposed at a first axial position with respect to the center axis 90, and the at least one further flow channel 110 is disposed at a second axial position being different to the first axial position. This may ensure that the nozzle portion 74 can be provided with more flow channels for providing a better transition from the pre-combustion chamber 66 into the main combustion chamber 26.

As depicted in Fig. 3, the outlets of the flow channels may be distributed azimuthically with respect to the center axis 90. This may further support in ensuring a uniform distribution of the burning fuel from the pre-combustion chamber 66 into the main combustion chamber 26.

Furthermore, as indicated in Fig. 2, the at least one flow channel 110 may extend obliquely downward from pre-combustion chamber 69 to the main combustion chamber 26, such that the opening edge of the inlet portion 114 may be disposed at a higher level than the outlet 116. In some embodiments, the center axis L of the at least one flow channel 110 may form an angle β with a horizontal axis in a range from, for example, about 5° to 20°, preferably 5° to 10°.

### Industrial Applicability

In the following, usage of the exemplary disclosed ignition plug tip 70 attached an exemplary disclosed ignition plug 70 during operation of the gaseous fuel internal combustion engine 10 is described with reference to Figs. 1 to 3.

During the intake stroke of the gaseous fuel internal combustion engine 10, a mixture of gaseous fuel and air may be supplied into the main combustion chamber 26 via the intake opening 28. Subsequently the intake opening 28 closes the supply of the mixture of gaseous fuel and air to the main combustion chamber 26 and the compression stroke may start.

During the compression stroke of the gaseous fuel internal combustion engine 10, the piston 16 compresses the mixture of gaseous fuel and air to a predetermined pressure. During such compression, at least some of the mixture of gaseous fuel and air may be pushed from the main combustion chamber 26 into the pre-combustion chamber 66 disposed within the ignition plug 60 and the ignition plug tip 70 via the at least one flow channel 110.

After the compression stroke is finished, an electronic control unit (not shown in the drawings) may provide a signal to the ignition plug 60, specifically to the at least one electrode 80 for generating a spark within the pre-combustion chamber 66. The spark is configured to ignite the mixture of gaseous fuel and air within the pre-combustion chamber. The ignited mixture may then expand out of the pre-combustion chamber 66 through the at least one flow channel 110 into the main combustion chamber in form of torches, which may then, in turn, ignite the mixture of gaseous fuel and air within the main combustion chamber 26.

Due to the funnel-shaped outlet 116, the change in velocity of the burning fuel, which is based on the continuation equation, may be smoothly. Thus, the burning fuel expanding in the form of torches through the at least one flow channel 110 may reach into the entire main combustion chamber 26, such that the approximately the entire amount of the mixture of gaseous fuel and air may be ignited.

Although the preferred embodiments of this invention have been described herein, improvements and modifications may be incorporated without departing from the scope of the following claims.

## Claims

1. An ignition plug tip (70) of an ignition plug (60) configured to be used in an internal combustion engine (10) including at least one main combustion chamber (26), the ignition plug tip (70) comprising:
a nozzle portion (74) forming at least a portion of a pre-combustion chamber (66) and having an inner surface (75); and
at least one flow channel (110) configured to fluidly connect the pre-combustion chamber (66) to the main combustion chamber (26), the at least one flow channel (110) including a main portion (118) having constant cross-section and a funnel-shaped inlet portion (114) at the inner surface (75), and **characterized in that** the at least one flow channel (110) extending tangentially with respect to a center axis (90) of the nozzle portion (74) such that a swirl of the combustion mixture within the main combustion chamber (26) is increased, and the funnel-shaped inlet portion (114) having a length (a) of about 30 % to 70 % the length (c) of the at least one flow channel (110).

2. The ignition plug tip (70) of claim 1, wherein the funnel-shaped inlet portion (114) opens in a direction of the inner surface (75).

3. The ignition plug tip (70) of any one of claims 1 or 2, wherein the funnel-shaped inlet portion (114) includes a rounded edge at the inner surface (75).

4. The ignition plug tip (70) of any one of claims 1 or 2, wherein the funnel-shaped inlet portion (114) includes a chamfered edge at the inner surface (75).

5. The ignition plug tip (70) of any one of the preceding claims, wherein
the nozzle portion (74) further includes an outer surface (73) configured to at least partially extend into the main combustion chamber (26), and
the at least one flow channel (110) further includes a funnel-shaped outlet (116) at the outer surface (73).

6. The ignition plug tip (70) of any one of the preceding claims, wherein the inner surface (75) includes a bottom portion (76) having a convex funnel-like shape.

7. The ignition plug tip (70) of any one of the preceding claims, wherein the funnel-shaped outlet (116) of the at least one flow channel (110) is distributed azimuthically with respect to a center axis (90) of the nozzle portion (74).

8. The ignition plug tip (70) of any one of the preceding claims, wherein the at least one flow channel (110) extends obliquely downward from the inner surface (75) to the outer surface (75).

9. The ignition plug tip (70) of any one of the preceding claims, further comprising at least one further flow channel (110), wherein the at least one flow channel (110) is disposed at a first axial position with respect to a center axis of the nozzle portion (74), and the at least one further flow channel (110) is disposed at a second axial position being different to the first axial position.

10. An ignition plug (60) configured to be used in an internal combustion engine (10), comprising:
an ignition plug main body (62) forming at least a portion of a pre-combustion chamber (66); and
an ignition plug tip (70) of any one of the preceding claims attached to the ignition plug main body (62).

11. The ignition plug (60) of claim 10, further comprising at least one electrode (80) extending at least partially into the pre-combustion chamber (66).

12. The ignition plug (60) of any one of claims 10 or 11,
wherein the ignition plug main body (62) includes a threaded portion (64) configured to engage a cylinder head (24) of the internal combustion engine (10).

13. The ignition plug (60) of any one of claims 10 to 12,
wherein the ignition plug tip (70) is attached to the ignition plug main body (62) by at least one of welding, soldering, and/or pressure fitting.

14. An internal combustion engine (10) comprising:
at least one cylinder (14) defining at least a portion of a main combustion chamber (26);
a cylinder head (24) configured to form at least a portion of the main combustion chamber (26); and
at least one ignition plug (60) of any one of claims 10 to 13 attached to the cylinder head (24), wherein the ignition plug tip (70) at least partially extends into the main combustion chamber (26), and is in fluid communication with the main combustion chamber (26) via the at least one flow channel (110).

## Patentansprüche

1. Zündkerzenspitze (70) einer Zündkerze (60), die dazu konfiguriert ist, in einer Brennkraftmaschine (10) verwendet zu werden, einschließlich mindestens einer Hauptbrennkammer (26), wobei die Zündkerzenspitze (70) umfasst:
einen Düsenabschnitt (74), der zumindest einen Abschnitt einer Vorbrennkammer (66) bildet und eine Innenoberfläche (75) aufweist; und
mindestens einen Strömungskanal (110), der dazu konfiguriert ist, die Vorbrennkammer (66) fluidisch mit der Hauptbrennkammer (26) zu verbinden, wobei der mindestens eine Strömungskanal (110) einen Hauptabschnitt (118) einschließt, der einen konstanten Querschnitt und einen trichterförmigen Einlassabschnitt (114) an der Innenoberfläche (75) aufweist, und **dadurch gekennzeichnet, dass** sich der mindestens eine Strömungskanal (110) tangential in Bezug auf eine Mittelachse (90) des Düsenabschnitts (74) erstreckt, sodass eine Verwirbelung des Verbrennungsgemisches innerhalb der Hauptbrennkammer (26) erhöht wird, und der trichterförmige Einlassabschnitt (114) eine Länge (a) von etwa 30 % bis 70 % der Länge (c) des mindestens einen Strömungskanals (110) aufweist.

2. Zündkerzenspitze (70) nach Anspruch 1, wobei sich der trichterförmige Einlassabschnitt (114) in eine Richtung der Innenoberfläche (75) öffnet.

3. Zündkerzenspitze (70) nach einem der Ansprüche 1 oder 2, wobei der trichterförmige Einlassabschnitt (114) eine abgerundete Kante an der Innenoberfläche (75) einschließt.

4. Zündkerzenspitze (70) nach einem der Ansprüche 1 oder 2, wobei der trichterförmige Einlassabschnitt (114) eine abgeschrägte Kante an der Innenoberfläche (75) einschließt.

5. Zündkerzenspitze (70) nach einem der vorstehenden Ansprüche, wobei
der Düsenabschnitt (74) ferner eine Außenoberfläche (73) einschließt, die dazu konfiguriert ist, sich mindestens teilweise in die Hauptbrennkammer (26) zu erstrecken, und
der mindestens eine Strömungskanal (110) ferner einen trichterförmigen Auslass (116) an der Außenoberfläche (73) einschließt.

6. Zündkerzenspitze (70) nach einem der vorstehenden Ansprüche, wobei die Innenoberfläche (75) einen unteren Abschnitt (76), aufweisend eine konvexe trichterartige Form einschließt.

7. Zündkerzenspitze (70) nach einem der vorstehenden Ansprüche, wobei der trichterförmige Auslass (116) des mindestens einen Strömungskanals (110) azimutal in Bezug auf eine Mittelachse (90) des Düsenabschnitts (74) verteilt ist.

8. Zündkerzenspitze (70) nach einem der vorstehenden Ansprüche, wobei sich der mindestens eine Strömungskanal (110) von der Innenoberfläche (75) zu der Außenoberfläche (75) schräg nach unten erstreckt.

9. Zündkerzenspitze (70) nach einem der vorstehenden Ansprüche, ferner umfassend mindestens einen weiteren Strömungskanal (110), wobei der mindestens eine Strömungskanal (110) an einer ersten axialen Position in Bezug auf eine Mittelachse des Düsenabschnitts (74) angeordnet ist, und der mindestens eine weitere Strömungskanal (110) an einer zweiten axialen Position, die sich von der ersten axialen Position unterscheidet, angeordnet ist.

10. Zündkerze (60), die dazu konfiguriert ist, in einer Brennkraftmaschine (10) verwendet zu werden, umfassend:
einen Zündkerzenhauptkörper (62), der zumindest einen Abschnitt einer Vorbrennkammer (66) bildet; und
eine Zündkerzenspitze (70) nach einem der vorstehenden Ansprüche, die an dem Zündkerzenhauptkörper (62) angebracht ist.

11. Zündkerze (60) nach Anspruch 10, ferner umfassend mindestens eine Elektrode (80), die sich mindestens teilweise in die Vorbrennkammer (66) erstreckt.

12. Zündkerze (60) nach einem der Ansprüche 10 oder 11, wobei der Zündkerzenhauptkörper (62) einen Gewindeabschnitt (64) einschließt, der dazu konfiguriert ist, in einen Zylinderkopf (24) der Brennkraftmaschine (10) einzugreifen.

13. Zündkerze (60) nach einem der Ansprüche 10 bis 12, wobei die Zündkerzenspitze (70) an dem Zündkerzenhauptkörper (62) durch mindestens eines von einem Schweißen, Löten und/oder Druckanpassen angebracht ist.

14. Brennkraftmaschine (10), umfassend:
mindestens einen Zylinder (14), der zumindest einen Abschnitt einer Hauptbrennkammer (26) definiert;
einen Zylinderkopf (24), der dazu konfiguriert ist, zumindest einen Abschnitt der Hauptbrennkammer (26) zu bilden; und
mindestens eine Zündkerze (60) nach einem der Ansprüche 10 bis 13, die an dem Zylinderkopf (24) angebracht ist, wobei sich die Zündkerzenspitze (70) mindestens teilweise in die Hauptbrennkammer (26) erstreckt und mit der Hauptbrennkammer (26) über den mindestens einen Strömungskanal (110) in Fluidverbindung steht.

## Revendications

1. Une pointe de bougie d'allumage (70) d'une bougie d'allumage (60) configurée pour être utilisée dans un moteur à combustion interne (10) comprenant au moins une chambre de combustion principale (26), la pointe de bougie d'allumage (70) comprenant :
une partie de buse (74) formant au moins une partie d'une chambre de pré-combustion (66) et ayant une surface interne (75) ; et
au moins un canal d'écoulement (110) configuré pour relier de manière fluidique la chambre de pré-combustion (66) à la chambre de combustion principale (26), l'au moins un canal d'écoulement (110) comprenant une partie principale (118) ayant une section transversale constante et une partie d'entrée en forme d'entonnoir (114) au niveau de la surface interne (75), et **caractérisé en ce que** l'au moins un canal d'écoulement (110) s'étendant de manière tangentielle par rapport à un axe central (90) de la partie de buse (74) de sorte qu'un tourbillon du mélange de combustion au sein de la chambre de combustion principale (26) est augmenté, et la partie d'entrée en forme d'entonnoir (114) ayant une longueur (a) d'environ 30 % à 70 % de la longueur (c) de l'au moins un canal d'écoulement (110).

2. Pointe de bougie d'allumage (70) selon la revendication 1, dans laquelle la partie d'entrée en forme d'entonnoir (114) s'ouvre dans une direction de la surface interne (75).

3. Pointe de bougie d'allumage (70) selon l'une quelconque des revendications 1 ou 2, dans laquelle la partie d'entrée en forme d'entonnoir (114) comprend un bord arrondi au niveau de la surface interne (75).

4. Pointe de bougie d'allumage (70) selon l'une quelconque des revendications 1 ou 2, dans laquelle la partie d'entrée en forme d'entonnoir (114) comprend un bord chanfreiné au niveau de la surface interne (75).

5. Pointe de bougie d'allumage (70) selon l'une quelconque des revendications précédentes, dans laquelle :
la partie de buse (74) comprend en outre une surface externe (73) configurée pour s'étendre au moins partiellement dans la chambre de combustion principale (26), et
l'au moins un canal d'écoulement (110) comprend en outre une sortie en forme d'entonnoir (116) au niveau de la surface externe (73).

6. Pointe de bougie d'allumage (70) selon l'une quelconque des revendications précédentes, dans laquelle la surface interne (75) comprend une partie inférieure (76) ayant une forme en forme d'entonnoir convexe.

7. Pointe de bougie d'allumage (70) selon l'une quelconque des revendications précédentes, dans laquelle la sortie en forme d'entonnoir (116) de l'au moins un canal d'écoulement (110) est répartie de manière azimutale par rapport à un axe central (90) de la partie de buse (74).

8. Pointe de bougie d'allumage (70) selon l'une quelconque des revendications précédentes, dans laquelle l'au moins un canal d'écoulement (110) s'étend obliquement vers le bas à partir de la surface interne (75) jusqu'à la surface externe (75).

9. Pointe de bougie d'allumage (70) selon l'une quelconque des revendications précédentes comprenant en outre au moins un canal d'écoulement supplémentaire (110), dans laquelle l'au moins un canal d'écoulement (110) est disposé à une première position axiale par rapport à un axe central de la partie de buse (74), et l'au moins un canal d'écoulement supplémentaire (110) est disposé à une deuxième position axiale qui est différente de la première position axiale.

10. Bougie d'allumage (60) configurée pour être utilisée dans un moteur à combustion interne (10), comprenant :
un corps principal de bougie d'allumage (62) formant au moins une partie d'une chambre de pré-combustion (66) ; et
une pointe de bougie d'allumage (70) selon l'une quelconque des revendications précédentes fixée au corps principal de la bougie d'allumage (62).

11. Bougie d'allumage (60) selon la revendication 10, comprenant en outre au moins une électrode (80) s'étendant au moins partiellement dans la chambre de pré-combustion (66).

12. Bougie d'allumage (60) selon l'une quelconque des revendications 10 ou 11, dans laquelle le corps principal de la bougie d'allumage (62) comprend une partie filetée (64) configurée pour venir en prise avec une culasse (24) du moteur à combustion interne (10).

13. Bougie d'allumage (60) selon l'une quelconque des revendications 10 à 12, dans laquelle la pointe de bougie d'allumage (70) est fixée au corps principal de la bougie d'allumage (62) par au moins l'un d'une soudure, d'un soudage et/ou d'un ajustement sous pression.

14. Moteur à combustion interne (10), comprenant :
au moins un cylindre (14) définissant au moins une partie d'une chambre de combustion principale (26) ;
une culasse (24) configurée pour former au moins une partie de la chambre de combustion principale (26) ; et
au moins une bougie d'allumage (60) selon l'une quelconque des revendications 10 à 13 fixée à la culasse (24), dans lequel la pointe de bougie d'allumage (70) s'étend au moins partiellement dans la chambre de combustion principale (26), et est en communication fluidique avec la chambre de combustion principale (26) via l'au moins un canal d'écoulement (110).
